# EUROPEAN PATENT SPECIFICATION

(11) **EP 3 332 311 B1**
(45) Date of publication and mention of the grant of the patent: **04.12.2019**
(21) Application number: 16751116.1
(22) Date of filing: 04.08.2016
(51) Int. Cl.: G06F 3/01, G06F 3/0482

(54) **HOVER BEHAVIOR FOR GAZE INTERACTIONS IN VIRTUAL REALITY**
SCHWEBEVERHALTEN FÜR BLICKINTERAKTION IN VIRTUELLER REALITÄT
COMPORTEMENT EN SURVOL POUR INTERACTION D'UN REGARD DANS RÉALITÉ VIRTUELLE

(30) Priority: 04.08.2015 US 201562200821 P
(43) Date of publication of application: 13.06.2018
(73) Proprietor: Google LLC, Mountain View, CA 94043 (US)
(72) Inventor: FAABORG, Alexander James, Mountain View, California 94043 (US); KVAALEN, Samuel, Mountain View, California 94043 (US); CLEMENT, Manuel Christian, Mountain View, California 94043 (US)
(74) Representative: Openshaw & Co.
(86) International application number: PCT/US2016/045518
(87) International publication number: WO 2017/024118

(56) References cited:
- US-A1- 2014 237 366

## Description

### TECHNICAL FIELD

This description generally relates to the use of computing devices in a virtual reality (VR) environment.

### BACKGROUND

In general, virtual reality can surround and immerse a person in a computer-generated, three-dimensional (3D) environment. The person can enter this environment by interacting with and/or physically wearing specific electronic devices. Example electronic devices can include, but are not limited to, a helmet that includes a screen, glasses or goggles that a user looks through when viewing a screen (e.g., a display device or monitor), gloves fitted with sensors, and external handheld devices that include sensors. Once the person enters the VR environment, the person can interact with the 3D environment in a way (e.g., a physical way) that seems real to the person.

US 2014/0237366 A1 discloses a method that relates to operating a user interface on an augmented reality computing device comprising a see-through display system.

### SUMMARY

The invention is defined by the independent claims. Preferred embodiments are provided by the dependent claims. The reader should bear in mind that some aspects, embodiments or examples of the description may not comprise all features of the invention as claimed. The aspects, embodiments and/or examples of the following description which are not covered by the claims, are provided for illustrative purpose only and are only intended to assist the reader in understanding the present invention. However, such aspects, embodiments and/or examples which are not covered by the claims do not describe the claimed invention.

According to one general aspect, a system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

In one general aspect, a computer-implemented method includes a system of one or more computers configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions. The actions may include generating and displaying, for a virtual environment, a plurality of non-contact targets, the plurality of non-contact targets each including interactive functionality associated with a virtual object. The actions may further include detecting a first non-contact input in the virtual environment. The non-contact input may correspond to a location associated with at least one non-contact target. The actions may further include determining whether the first non-contact input satisfies a predefined threshold associated with the at least one non-contact target, and upon determining that the first non-contact input satisfies the predefined threshold, the actions can include providing for display in a head mounted display, the at least one non-contact target at the location. In response to detecting a second non-contact input at the location, the actions can include executing, in the virtual environment, the interactive functionality associated with the at least one non-contact target. Other embodiments of this aspect include corresponding computer systems, apparatus, and computer programs recorded on one or more computer storage devices, each configured to perform the actions of the methods.

Implementations may include one or more of the following features. The first non-contact input may include a deceleration speed associated with a user and the second non-contact input may include an eye gaze associated with a user accessing the head mounted display. The first non-contact input may include an acceleration speed associated with a user and the second non-contact input may include an eye gaze associated with a user accessing the head mounted display. In some implementations, detecting the second non-contact input may include detecting eye gaze direction associated with a user by analyzing a plurality of images of an eye of the user, where the eye gaze is detected with the head mounted device.

In some implementations, determining whether the first non-contact input satisfies the predefined threshold includes may include obtaining trigger information for the plurality of non-contact targets. The trigger information may correspond to indications for executing interactive functionality. Determining whether the first non-contact input satisfies the predefined threshold may also include determining an intent associated with a user, determining an initial location in the virtual environment and a movement speed for the user, and comparing the intent and the movement speed to the trigger information to obtain a confidence level for executing the interactive functionality. Determining the intent may also include analyzing an acceleration or deceleration of a movement associated with the user.

In some implementations, the second non-contact input includes an eye gaze associated with a user and the eye gaze is fixated to trigger the interactive functionality. In some implementations, the eye gaze triggers the interactive functionality after a fixation of about 50 milliseconds to about 100 milliseconds. The interactive functionality associated with the virtual object may include a non-contact selectable menu corresponding to the virtual object. In response to detecting the second non-contact input, the actions can include providing a plurality of non-contact controls at the location. Implementations of the described techniques may include hardware, a method or process, or computer software on a computer-accessible medium.

In another general aspect, a system may include an electronic computing device generating a virtual reality experience in a virtual reality environment. The electronic computing device may be portable within a physical space. The system may also include a plurality of sensors in communication with the electronic computing device. The sensors may be configured to detect motion associated with a user accessing the electronic computing device within the physical space. The system may also include a processor configured to determine a speed associated with each motion over a time period and a distance from a portion of the user performing the motion to at least one virtual object. The processor may also be configured to engage a first interaction mode for the virtual environment in response to determining an accelerating speed associated with the motion over the time period. The processor may also be configured to engage a second interaction mode for the virtual environment in response to determining a decelerating speed associated with the motion over the time period, and to display, in the virtual reality environment, an indication of the engaged mode and using the engaged mode to execute interactive functionality associated with the motion and the at least one virtual object. Other embodiments of this aspect include corresponding computer systems, apparatus, and computer programs recorded on one or more computer storage devices, each configured to perform the actions of the methods.

Implementations may include one or more of the following features. The system as described above in which the interactive functionality associated with the virtual object includes a non-contact selectable menu corresponding to the virtual object. The system as described above in which the first interaction mode includes displaying, in the virtual environment, selectable portions on the at least one virtual object, the selectable portions being provided after detection of the speed and the distance from the portion of the user to the at least one virtual object.

The system as described above in which the second interaction mode includes displaying, in the virtual environment, other selectable portions on the at least one virtual object, the other selectable portions being provided after a predefined threshold and after detection of additional movement performed by the user. The system as described above in which the motion is associated with an eye movement toward the at least one virtual object and the eye movement triggers the interactive functionality after a fixation of about 50 milliseconds to about 100 milliseconds. The system as described above in which the motion is associated with an eye movement of the user, the eye movement directed away from the at least one virtual object. The system as described above in which the motion is associated with a hand movement of the user, the hand movement directed toward the at least one virtual object. Implementations of the described techniques may include hardware, a method or process, or computer software on a computer-accessible medium.

In another general aspect, a non-transitory computer readable medium is described. The non-transitory computer readable medium may contain instructions that, when executed by a processor of a computer system, cause the computer system to generate, for a virtual environment, a plurality of non-contact targets, the plurality of non-contact targets each including interactive functionality associated with a virtual object, detect a first non-contact input in the virtual environment. The non-contact input may correspond to a location associated with at least one non-contact target. The instructions may also include determining whether the first non-contact input satisfies a predefined threshold associated with the at least one non-contact target, and upon determining that the first non-contact input satisfies the predefined threshold, providing for display in a head mounted display, the at least one non-contact target at the location. The instructions may also include executing, in the virtual environment, the interactive functionality associated with the at least one non-contact target, in response to detecting a second non-contact input at the location. In some implementations, the first non-contact input comprises a deceleration speed associated with a user and the second non-contact input comprises an eye gaze associated with a user accessing the head mounted display. In some implementations, detecting the second non-contact input comprises detecting eye gaze direction associated with a user by analyzing a plurality of images of an eye of the user, wherein the eye gaze is detected with the head mounted device.

Other embodiments of this aspect include corresponding computer systems, apparatus, and computer programs recorded on one or more computer storage devices, each configured to perform the actions of the methods.

The details of one or more implementations are set forth in the accompanying drawings and the description below. Other features will be apparent from the description and drawings, and from the claims.

### BRIEF DESCRIPTION OF THE DRAWINGS

FIG. 1 is a block diagram of an example system for creating and interacting with a 3D virtual reality (VR) environment.
FIG. 2 is a diagram that illustrates a head mounted display (HMD) device accessing VR content with a computing device.
FIGS. 3A and 3B are example diagrams that illustrate an example of a VR user interface.
FIG. 4 is a diagram that illustrates an image of a VR environment that a user can view on the screen of a VR HMD device.
FIG. 5 is a flow chart diagramming one embodiment of a process to interact with targets in a virtual environment.
FIG. 6 shows an example of a computer device and a mobile computer device that can be used to implement the techniques described here.

Like reference symbols in the various drawings indicate like elements.

### DETAILED DESCRIPTION

A computer-generated virtual reality environment can create an experience for a user that enables the user to forget that he or she is immersed in virtual reality space. The immersive experience can lead to the user learning to interact differently with the perceived virtual reality environment (e.g., the VR environment). In general, the VR environment can provide a user with a number of mechanisms with which to interact with virtual content. The mechanisms can include physical devices configured to sense particular user movement, such as wearable items configured with electronics and sensors. The mechanisms can also include sensors or cameras for sensing user eye movements and gaze direction.

User interactions in the virtual environment may be familiar to the user if the interactions are similar to the motions used to perform the same interactions in a physical environment. However, some interactions in the VR environment may not be familiar to the user, and as such, the user can learn to adapt in the VR environment to perform tasks. For example, removing a virtual item (e.g., a book) from a shelf in the VR environment may include the same or similar motions involved when removing a physical book from a shelf in the physical world. That is, the user can manipulate his or her hands and arms to perform the motion of removing the book from the shelf in both the virtual and the physical world. The user may not have to learn a new interactive motion in order to complete the movement to remove the book from the shelf in the virtual world. However, if the VR environment provides a system that uses walking speed as a trigger to display the books in the bookshelf, the user may not catch on as quickly, but can learn to use the motion to display or not display the books. Similarly, if the VR environment provides a system that uses eye gaze to indicate selection of a book, the movement may select a book more quickly than if the VR environment were configured so that access to the book is triggered by the user reaching out a hand. Such actions may be quickly learned and particular ease can be provided to the user by the systems described in this disclosure. The systems described herein may be configured to analyze user interaction timing, object placement, target placement, and trigger mechanisms. A number of embodiments described below include systems and methods for providing an interactive virtual reality (VR) environment that provides such ease to a user.

In general, the systems and methods described below can use an acceleration or deceleration speed pertaining to a body movement or an eye movement performed by a user moving around (or looking around) in a VR environment to trigger display of interactive controls (e.g., triggered by accessing targets). A target can be a selectable portion of a virtual object or of a portion of space within the VR environment. The selection can include collisions (e.g., contact based input) or sensed motion (e.g., non-contact based input). For example, if a target is contact based, the target is configured to receive contact based input. In contact based targets, a user may physically (via the virtual environment) collide with the target on a virtual object using hands or other body parts to connect and interact with the virtual object. If a target is non-contact based, the target is configured to receive non-contact based input. That is, a user may gaze at a virtual object, turn toward a virtual object, hover near a virtual object, and/or audibly invoke targets on a virtual object using voice commands, etc. to engage or interact with the virtual object. In some implementations, virtual objects are configured to receive both contact based and non-contact based inputs. In such examples, the systems and methods described herein may be configured to select the basis in which to respond to user input.

Targets (and sparks) can be generated by a spark generation module 118. Spark generation module 118 may provide a director (or virtual user) with a menu of options in which to place sparks on virtual objects or other virtual content in the VR environment. In general, targets and sparks can be placed to strategically invoke interactive functionality associated with particular virtual objects and/or virtual scenes in response to user input. For example, targets and/or sparks may invoke interactive functionality associated with particular virtual objects and/or virtual scenes. In some implementations, the interactive functionality associated with the virtual object includes a non-contact selectable menu corresponding to one or more virtual objects in the VR environment.

In some implementations, the systems and methods can vary a time threshold or time delay to determine when or if to trigger display of the targets representing interactive functionality. The display of the interactive functionality to a user can be tuned or otherwise dynamically modified in response to detecting user movement and/or eye gaze changes while in the VR environment.

Although conventional methods of interacting with objects in a VR environment can be used (e.g., controller, input controls, gloves, arm movement, hand gestures, etc.), the systems and methods described herein can be configured to detect and react to movements such as hover behavior and/or eye gaze behavior associated with a user. In addition, the systems and methods can be used to detect and react accordingly to the speed at which a user moves into or out of an area.

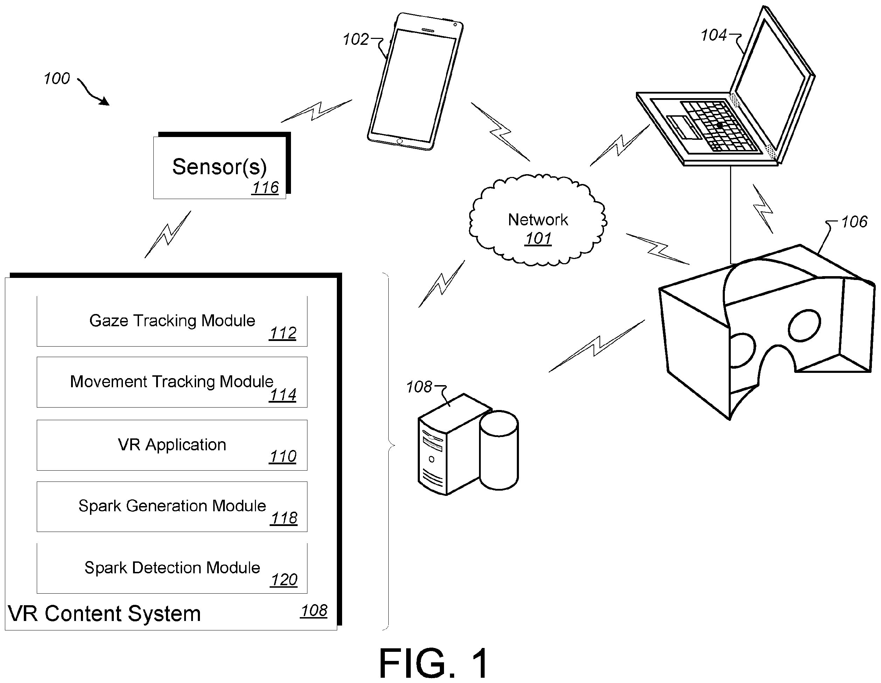

FIG. 1 is a block diagram of an example system 100 for creating and interacting with a 3D virtual reality (VR) environment. In general, the system 100 may provide the 3D VR environment and VR content for a user to access, view, and interact with using the methods, components, and techniques described herein. In particular, system 100 can provide the user with options for accessing the content, virtual objects, and VR controls using eye gaze and/or movements within the VR environment. For example, when the user hovers into a target presented in the VR environment, the system 100 can detect the movement and display a number of selectable areas within the VR environment (e.g., targets) that the user can pass through to trigger immediate or near immediate action (e.g., functionality). Passing through a target may be referred to as colliding with the target. The collision can trigger the action associated with the target.

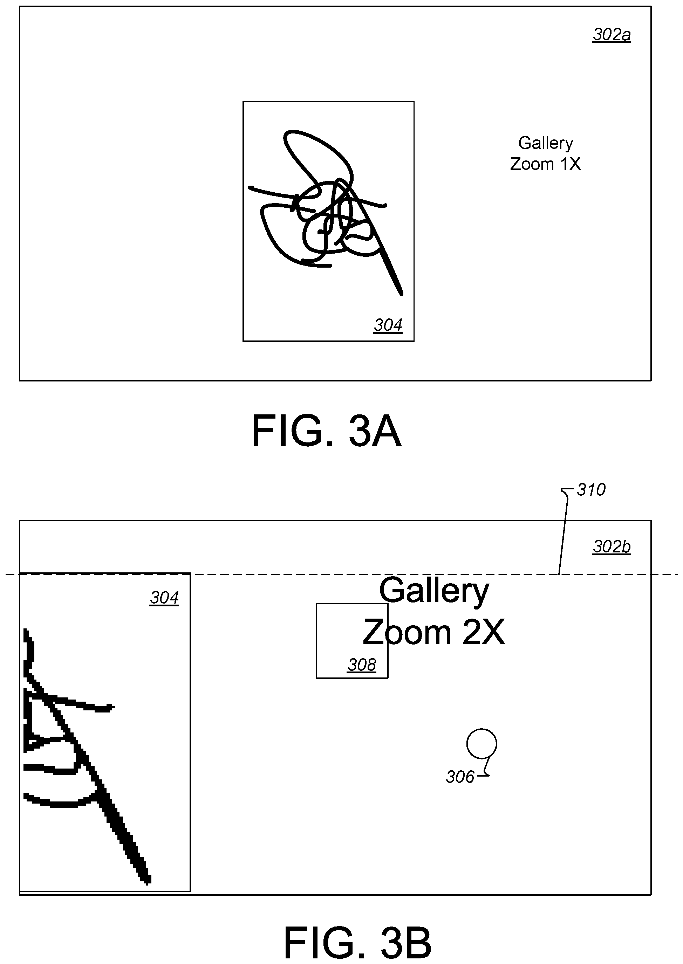

As used herein, a target may be associated with receiving input and performing an action associated with content in the virtual environment. For example, a target may be placed near a light switch bank in a virtual room. The user can hover or gaze at the light switch bank to trigger the lights to turn on or off. The light switch bank can be configured with any number of switches and each switch can additionally include a finer target mechanism that can activate the one switch, while not activating the other switches in the bank. This finer target mechanism may be referred to as a spark. The spark may be represented by a target, but is generally smaller in size than other targets in the VR environment. In addition, the spark may or may not include expiration of a countdown timer or gaze interaction dwell time requirements before activating one or more associated actions. Other types of sparks are possible and sparks can be configured at any size or shape throughout the virtual environment. Sparks can also be connected in some sequence that may be performed by a user in order to set off one or more activities (or other sparks) associated with the sequenced sparks, for example. Targets (e.g., sparks) are illustrated in more detail in connection with at least FIGS. 3A through 4.

In some implementations, a spark can be provided in a predetermined position. In some implementations, a spark can be provided in a variable position or random position based on the user selecting particular options while in the VR environment. For example, in some VR environments, the spark may be placed in a different direction from where the user entered the environment. In some implementations, the spark may be placed to trigger the attention of the user in the event that the system detects particular behavior from the user. For example, if the user stands still for a lengthy period of time, the VR application 110 may determine that the user is confused, lost, or unsure of what to do next. In response, the VR application 110 can provide (e.g., trigger display of) one or more sparks to direct the user to a menu or other area in which to trigger directions or other interactions. Sparks and targets can be triggered in response to a user providing a non-contact based or contact based input. The triggering of sparks and targets can be detected by spark detection module 120. The spark detection module 120 can include and or communicate with one or more sensors 116 to detect user input and interaction in the VR environment.

In some implementations, the system 100 can delay action and/or trigger countdown timers before performing one or more particular actions. In some implementations, the system 100 can take into account acceleration speed or deceleration speed associated with the user when determining whether to perform an action or when determining whether to display a target (e.g., spark). For example, in the event that the user quickly moves through a particular area that includes a trigger for executing VR functionality, the system 100 can determine that the increased speed (i.e., acceleration) into the area indicates that the user does not intend to trigger targets (e.g., sparks) throughout the area. Accordingly, the system 100 can automatically determine not to render content (or trigger targets e.g., sparks) in that particular area based on the rapid speed of acceleration. In some implementations, such speed can indicate that the user wishes to move through a first area and into another area before triggering interactions between the VR environment and the user.

In some implementations, the system 100 can include a portable electronic computing device such as mobile device 102. Mobile device 102 can be inserted into HMD device 106 to display virtual content to the user. In other examples, mobile device 102 can be used in combination with a computerized HMD device (not shown). Device 102 or HMD device 106 can generate a virtual reality experience in the virtual reality environment.

The system 100 can include any number of sensors 116 (e.g., tracking devices, sensing devices, proximity triggers, etc.). The sensors 116 may be in communication with device 102. In some implementations, the sensors 116 are configured to detect motion associated with a user accessing the electronic computing device within the physical space that the user can move within. The motion of the user within the physical space is then transformed by the system 100 into a motion of the user in the virtual reality environment according to the defined coordinate system of the virtual environment. The system 100 may include any number of processors configured to determine a speed associated with each motion that a user may make over a particular time period. For example, the system 100 can detect (using sensors 116 and/or device 102) any motion associated with the user accessing the virtual reality environment.

In some implementations, the motion is associated with an eye movement (or head movement) toward (e.g., in the direction of) a virtual object. In some implementations, the motion is associated with an eye movement of the user in which the eye movement or eye gaze is directed away from a virtual object. The speed of the motion to look toward or away from an object (e.g., eye movement or fixation) can be used to trigger interactive functionality after a fixation of about 50 milliseconds to about 100 milliseconds. In some implementations, the motion is associated with a hand movement of the user. For example, the system 100 can detect whether a hand movement is directed toward or away from a virtual object.

In addition to the motion, the system 100 can detect a distance from a portion of the user performing the motion to at least one virtual object. The distance can be determined by calculating the virtual distance between the portion of the user and the at least one virtual object within the defined coordinate system of the virtual environment. The speed and the distance can be used to select a fine or coarse engagement mode for the user reaching for, turning, toward, or gazing at particular virtual objects. For example, in response to determining an accelerating speed associated with the motion over a time period, the system 100 can engage a first interaction mode for the virtual environment. The first interaction mode may be a fine pitched display mode that triggers for display, in the virtual environment, selectable portions on a virtual object. The selectable portions may be provided after detection of the speed and the distance from an area of the user (e.g., eye, hand, foot, etc.) to the virtual object. Such a mode may be triggered to allow for intricate selections on the virtual object.

In some implementations, a second interaction mode can be triggered. The second interaction mode may be a coarse mode in which the user can select larger portions or menu items associated with the virtual object. In general, the second interaction mode may include displaying, in the virtual environment, selectable portions on object in which less precision can be used to accomplish a selection or action of the virtual object. In some implementations, the coarse mode of selection may be triggered in response to detecting an eye gaze and an additional movement by the user (e.g., eye movement, hand movement, etc.). The eye gaze can trigger a countdown of a predefined threshold and if additional movement is detected within the time threshold, additional selectable options or portions associated with the virtual object can be displayed to the user. In some implementations, the system 100 can engage the second interaction mode for the virtual environment in response to determining a decelerating speed associated with the motion over the time period.

Regardless of the selected mode, the system 100 can display, in the virtual reality environment, an indication of the engaged mode and can allow use of the engaged mode to execute interactive functionality associated with the motion and a particular virtual object. In some implementations, the interactive functionality associated with the virtual object comprises a non-contact selectable menu corresponding to the virtual object. The menu can include several suitable menu items to be selected by the user within the virtual environment.

As shown in FIG. 1, the example system 100 includes a plurality of computing devices that can exchange data over a network 101. The devices may represent clients or servers and can communicate via network 101, or other network. The client devices may include a mobile device, an electronic tablet, a laptop, a camera, VR glasses, or other such electronic device that may be used to access VR content.

The system 100 includes a mobile device 102, a laptop computing device 104, head mounted display (HMD) device 106, and VR content system 108. Devices 102, 104, and 106 may represent client devices. Mobile device 102, laptop 104, and HMD device 106 can include one or more processors and one or more memory devices. The devices 102-106 can execute a client operating system and one or more client applications that can access, control, and/or display VR content on a display device included in each respective device. The VR content system 108 may represent a server device. In general, VR content system 108 may include any number of repositories storing content and/or virtual reality software modules that can generate, modify, or execute virtual reality scenes.

The HMD device 106 may represent a virtual reality headset, glasses, eyepiece, or other wearable device capable of displaying virtual reality content. In operation, the HMD device 106 can execute a VR application which can playback received and/or processed images to a user. In some implementations, the VR application 110 can be hosted by one or more of the devices 102, 104, 106, or 108, shown in FIG. 1.

In some implementations, the mobile device 102 can be placed and/or located within the HMD device 106. The mobile device 102 can include a display device that can be used as the screen for the HMD device 106. The mobile device 102 can include hardware and/or software for executing the VR application 110.

Additional devices are possible and such devices may be configured to be substituted for one another. In some implementations, the devices 102, 104, 106, and 108 can be laptop or desktop computers, smartphones, personal digital assistants, portable media players, tablet computers, gaming devices, or other appropriate computing devices that can communicate, using the network 101, with other computing devices or computer systems.

In the example system 100, the VR content system can include a VR application 110. The VR application 110 can be configured to execute on any or all of devices 102, 104, 106, and 108. The HMD device 106 can be connected to device 102 or device 104 to access VR content on VR content system 108, for example. Device 102 or 104 can be connected (wired or wirelessly) to HMD device 106, which can provide VR content for display.

In the event that the HMD device is wirelessly connected to device 102 or device 104, the connection may include use of one or more of the high-speed wireless communication protocols described herein. In the event that the HMD device 106 is wired to device 102 or 104, a wired connection can include a cable with an appropriate connector on either end for plugging into device 102 or device 104. For example, the cable can include a Universal Serial Bus (USB) connector on both ends. The USB connectors can be the same USB type connector or the USB connectors can each be a different type of USB connector. The various types of USB connectors can include, but are not limited to, USB A-type connectors, USB B-type connectors, micro-USB A connectors, micro-USB B connectors, micro-USB AB connectors, USB five pin Mini-b connectors, USB four pin Mini-b connectors, USB 3.0 A-type connectors, USB 3.0 B-type connectors, USB 3.0 Micro B connectors, and USB C-type connectors. Similarly, the wired connection can include a cable with an appropriate connector on either end for plugging into the HMD device 106 and device 102 or device 104. For example, the cable can include a Universal Serial Bus (USB) connector on both ends. The USB connectors can be the same USB type connector or the USB connectors can each be a different type of USB connector.

In some implementations, one or more content servers (e.g., VR content system 108) and one or more computer-readable storage devices can communicate with the computing devices 102, 104, 106 using network 101 to provide VR content to the devices 102-106. In some implementations, the network 101 can be a public communications network (e.g., the Internet, cellular data network, dialup modems over a telephone network) or a private communications network (e.g., private LAN, leased lines). In some implementations, the computing devices 102-108 can communicate with the network 101 using one or more high-speed wired and/or wireless communications protocols (e.g., 802.11 variations, WiFi, Bluetooth, Transmission Control Protocol/Internet Protocol (TCP/IP), Ethernet, IEEE 802.3, etc.).

In some implementations, the mobile device 102 can execute the VR application 110 and provide the content for the VR environment. In some implementations, the laptop computing device can execute the VR application 110 and can provide content from one or more content servers (e.g., VR content server 108). The one or more content servers and one or more computer-readable storage devices can communicate with the mobile device 102 and/or laptop computing device 104 using the network 101 to provide content for display in HMD device 106.

The VR application 110 includes a gaze tracking module 112 and a movement tracking module 114. The gaze tracking module 112 can interface with one or more sensors, computing systems, cameras, and/or controls to detect gaze/eye movement associated with the user. The one or more sensors, computing systems, cameras, and/or controls may be housed in HMD device 106, for example. The gaze tracking module 112 can be configured to track or monitor the direction of a user's eye gaze (i.e., tracking or monitoring where/which direction the user is looking). In general, gaze tracking performed by gaze tracking module 112 may include tracking both the orientation and location of one eye or both eyes with respect to a defined coordinate system.

The gaze tracking module 112 can receive images (e.g., video images) of a user's eye. For example, module 112 can receive or obtain images demonstrating the user's eye movements and gaze direction from an onboard camera in HMD device 106. The gaze tracking module 112 can analyze the images to generate gaze direction information, which can be used to determine the user's gazing direction. The gaze direction information can be correlated to a scene of images being displayed in HMD device 106, for example. For example, the gaze direction can be ascertained by gaze tracking module 112 using cameras viewing one or both eyes of a user accessing the HMD device 106. Similarly, head tracking can be performed using sensors communicably coupled and/or associated with HMD device 106. In particular, the module 112 can use the images to determine at what the user was directly looking at when viewing the scene.

The gaze tracking module 112 can use the gaze direction information for identifying a sequence of gaze attention and/or dwell positions and times. The gaze tracking module 112 can determine whether to trigger execution of some predefined target placed within the virtual environment based on the gaze attention and/or dwell positions and times. For example, if the module 112 determines that a user is gazing at a particular virtual object, targets can be displayed on the virtual object to indicate to the user additional options for modifying, selecting, moving, or otherwise interacting with the virtual object.

The gaze tracking module 112 can utilize information from sensors or cameras located in HMD device 106, and can map gaze attention of a user, including duration of attention on a target (e.g., spark), and sequence of gaze attention over time with respect to elements shown in a virtual environment. The pattern of attention and gaze may be used as a signal to trigger a particular target (e.g., spark) and/or action.

When providing sparks to a user for selection, the VR application can provide visual or sound-based indications highlighting the spark control to draw the attention of a user. Similarly, visual or sound-based indications can be provided when a spark is activated by the user. Visual indications can include, but are not limited to glowing, flashing, outlining, highlighting, texturizing, raising, lowering, color changing, dimming portions while brightening other portions, and brightening portions, while dimming other portions, or any combination thereof. Audio indications can include any available system sound and can occur upon display of a spark, as a user enters or leaves a boundary defined by a spark, upon selection of a spark, upon user-requested removal of all sparks or user-requested display of all available sparks for a particular environment.

Precisely tracking user movement and eye gaze in a VR environment may be important when implementing user interface content with targets and/or sparks when relying on eye gaze as an input trigger. Precise tracking can be performed using cameras to capture eye movements. As such, the system 108 can be configured to display a spark as a cursor, such as a dot, a set of pixels, an image, a control, or other marker in a portion (e.g., a center) of a virtual object (or rendering) to ensure the system 108 correctly perceives user intention, such as when the user selects an object in a VR environment. Because of this, the system 108 can provide targets (e.g., sparks) in a variety of sizes.

In general, the size of a spark can dictate an activation time that the system 108 associates with the spark. This is because, the smaller the spark, the less likely a user in the VR environment may be to identify and trigger the spark without honing in on the small area with intent to activate the action in the spark. As such, sparks can range from a few tens of pixels to inches of space in a virtual environment. Sparks can be any size or shape and can be graphically indicated as pixels, dots, images, controls, boxes, balls, just to name a few examples. In some implementations, a spark may be a glowing light with a bright center that fades outward.

In a non-limiting example, when a user hovers near a target (e.g., spark), the gaze tracking module 112 or the movement tracking module 114 can detect the hover (whether by eye gaze or virtual movement incited by the user), and in response to detecting the hover, the VR content system 108 can display a finer target mechanism (i.e., spark) for immediate action. The finer target mechanism may be a fine-pitched accurate mode of selecting small portions of the object, for example. The immediate action may be to perform the action associated with the spark, for example, instead of waiting for the countdown trigger. In some implementations, spark can trigger multiple targets such as a marking menu, or virtual control. In some implementations, the system 108 can take into account a user's acceleration or deceleration into an area. For example, if the user accelerates his or her walking speed when moving by a spark and does not hover or stop near the spark, the system 108 may not trigger the spark. Alternatively, if the user decelerates into the same area, the system 108 may trigger the spark (and any action associated with the spark) based on the change in speed associated with the user as determined by the sensor(s).

In general, the movement tracking module 114 can detect speed and accuracy of a user moving near a spark. The speed and accuracy can be detected using a number of sensors, cameras, and or devices. For example, if a user quickly passes through a spark in the virtual environment, then the VR content system 108 (i.e., VR application 110) may determine that the user did not satisfy a threshold level of movement, threshold of dwell time, or threshold of elapsed eye gaze time. An example threshold level of dwell time or eye gaze time may include 50 milliseconds to 100 milliseconds before triggering an action associated with a spark. In some implementations, the threshold may be based on the size of the target (e.g. Spark). For example, sparks that are small (e.g., relatively small surface area or volume) may have a short (50 millisecond countdown timer/threshold), while targets (e.g., sparks) that are larger (e.g., relatively large surface area or volume) may have a longer countdown timer (e.g., 2000 millisecond countdown timer/threshold). Small sparks may be a few tens of pixels, while large targets may be a standard size of a computer icon displayed in a virtual environment.

Returning to the light example described above, the light switch bank may include several switches and the user may only wish to activate one switch. Accordingly, a spark may be placed on each light switch and may be represented as a small element placed in a location that can be selected (or activated) by a user based on user movements or eye gaze interactions. The user can perform a selection using hovering and/or viewing activities. The gaze tracking module 112 and/or the movement racking module 114 can detect the eye gaze and/or movement of the user, respectively, to trigger performance of an activity represented by a triggered spark. The spark can be hovered into, gazed at, dwelled upon, and/or otherwise triggered and the VR content system 108 can respond to these actions by performing particular activities related to the virtual environment. In this example, the VR content system 108 may activate a light associated with a first switch if the user hovers his or her eye gaze or hand near the first switch.

In some implementations, the HMD device 106 includes an onboard gaze tracking module and any associated hardware and software associated with gaze tracking in lieu of accessing the networked server-based gaze tracking module 112. Such tracking information can be shared with VR content system 108. In addition, spark generation module 118, spark detection module 120, and movement tracking module 114 can also be executed as part of software running on HMD device 106.

In a non-limiting example, a user (not shown) can access VR content in a 3D environment using mobile device 102 connected to HMD device 106. While in the VR environment, the user can move around and look around. The system 100 can track user eye gaze (using gaze tracking module 112) and can track user movement (using movement tracking module 114). User movement may indicate how the user is moving his or her body (or device representing a body part) within the VR environment. User eye gaze may indicate what the user is looking at in the VR environment.

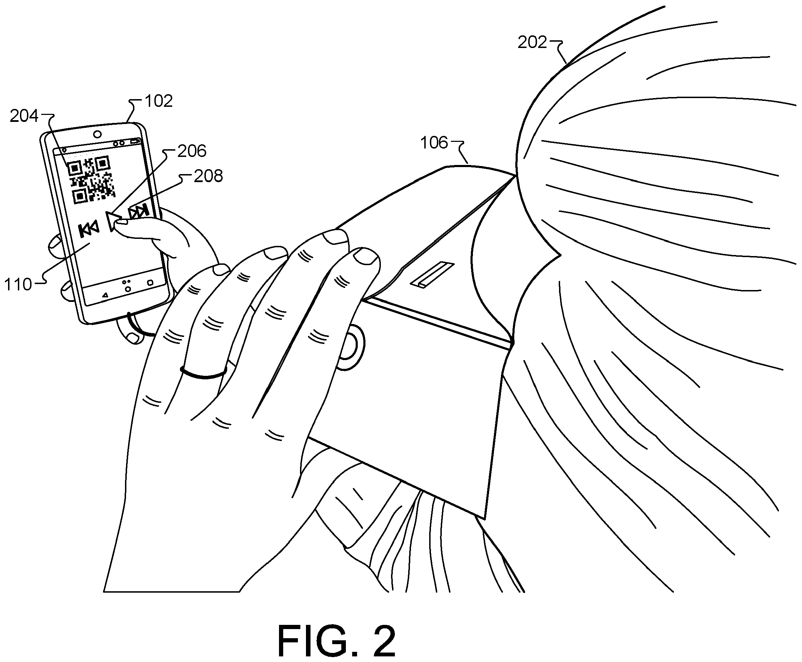

FIG. 2 is a diagram that illustrates an HMD device 106 (or VR device) accessing VR content with mobile device 102. In the example shown in FIG. 2, a user 202 may be watching a movie on a display device included in the computing device 102. To do so, a user can put on the HMD device 106 by placing the device 106 over the eyes of the user 202. In some implementations, referring to FIG. 1, the HMD device 106 can interface with/connect to a display on mobile device 102, for example, using one or more high-speed wired and/or wireless communications protocols (e.g., WiFi, Bluetooth, Bluetooth LE, USB, etc.) or by using an HDMI interface. The connection can provide the content to the HMD device 106 for display to the user on a screen included in the device 106.

One or more sensors can be included on mobile device 102 and can be triggered, by users accessing device 102 and HMD device 106, to provide input to the VR environment. The sensors can include, but are not limited to, a touchscreen, accelerometers, gyroscopes, pressure sensors, biometric sensors, temperature sensors, humidity sensors, and ambient light sensors. The mobile device 102 can use the sensors to determine an absolute position and/or a detected rotation of the device 102 in the VR environment that can then be used as input to the VR environment. The sensors can be included on or separated from the mobile device 102 and can determine, for example, user's acceleration or deceleration or the increased or decreased speed of the user or other related motions performed by the user. For example, the mobile device 102 may be incorporated into the VR environment as a mobile phone, a laser pointer, a controller, a remote, etc. Positioning of the mobile device 102 by the user when incorporated into the VR environment can allow the user to position the mobile phone, laser pointer, controller, remote, etc. in the VR environment.

In some implementations, one or more input devices included on the mobile device 102 can be used as input to the VR environment. The input devices can include, but are not limited to, a touchscreen, a keyboard, one or more buttons, a trackpad, a touchpad, a pointing device, a mouse, a trackball, a joystick, a camera, and a microphone. A user interacting with an input device included on the mobile device 102 when the device 102 is incorporated into the VR environment can cause a particular action to occur in the VR environment. For example, the mobile device 102 may be incorporated into the VR environment as a mobile phone with movie controls 206, 208. A user pressing a particular button on the mobile device 102 may play, pause, fast forward, or rewind a movie being rendered in the HMD device 102. Similarly, buttons or sparks on the mobile device 102 may be incorporated into the VR environment to control the volume of the audio of the movie. In this example, the user 202 can select QR code 204, play control 206, and/or fast forward or reverse controls 208 to perform actions on the movie being displayed in the HMD device 106. Alternatively, the user may not control the movie content using device 102, but may instead visually gaze at controls near or on a rendered virtual screen displayed in HMD 106 to perform the same actions represented by the mobile device controls 204, 206, and 208. For example, to fast-forward a movie that is being rendered for the user in the HMD device 106, the user may lift mobile device 102 as if to look at the screen of mobile device 102 to select the fast forward icon 208 using eye gaze, head gaze, etc. In this fashion, system 100 can use hand tracking, head tracking, and gaze tracking to allow the user to interact with controls rendered in the VR environment in addition to interacting with the provided targets (e.g., sparks).

In some implementations, a touchscreen of the mobile device 102 can be rendered as a touchpad in VR environment. A user can interact with the touchscreen of the mobile device 102. The interactions may be rendered as movements on the rendered touchpad in the VR environment. The rendered movements can control objects in the VR environment.

In some implementations, one or more output devices included on the mobile device 102 can provide output and/or feedback to a user of device 102 in the VR environment. The output and feedback can be visual, tactile, or audio. The output and/or feedback can include, but is not limited to, vibrations, turning on and off or blinking and/or flashing of one or more lights or strobes, sounding an alarm, playing a chime, playing a song, and playing of an audio file. The output devices can include, but are not limited to, vibration motors, vibration coils, piezoelectric devices, electrostatic devices, light emitting diodes (LEDs), strobes, and speakers.

In some implementations, the mobile device 102 may appear as another object in a computer-generated, 3D environment. As described in the above examples, the mobile device 102 may appear as a laser pointer in the VR environments. Interactions by the user with the mobile device 102 (e.g., rotating, shaking, touching a touchscreen, swiping a finger across a touch screen) can be interpreted as interactions with the object in the VR environment. In the example of the laser pointer in the VR environment, the mobile device 102 appears as a virtual laser pointer in the computer-generated, 3D environment. As the user manipulates the mobile device, the user in the VR environment sees movement of the laser pointer and can select targets and/or objects in the VR environment.

FIGS. 3A and 3B are example diagrams that illustrate an example of a VR user interface. In this example, the cursor interfaces 302A-302B can be configured to provide a user with a different experience depending the user's eye gaze and direction. For example, particular sparks can be placed within a virtual environment and the user can view these sparks as if they were controls placed throughout the virtual environment. Because the sparks can detract from viewing content in the virtual environment and therefore lessen the feel of presence and possible degrade the VR experience, the VR application 110 (e.g., spark detection module 120) can determine when, or if, to display (e.g., reveal, change display state of (from non-transparent to transparent, or vice versa) particular sparks. Spark generation module 118 can determine locations for placing the sparks based on the focus direction of the eye gaze of the user. The display of sparks or removal of sparks can be based on a user field of view, a user proximity to a virtual object, or based on inputs received at or near the spark. In this fashion, the VR application 110 (via spark generation module 118 and spark detection module 120) can provide a progressive, just-in-time virtual reality cursor interface (e.g., sparks) to the user at a time in which displaying such an interface will not detract from the user's VR experience.

As shown in FIG. 3A, the user may be viewing an abstract painting 304 in a VR environment. Cursor interface 302A is shown without any sparks being provided to the user. This may be because the user is viewing the painting 304 and the VR application 110 may not wish to interfere with providing spark or other controls when the point of looking at art is to visually enjoy the art. This point of looking can be determined by the gaze tracking module 112 depending on gaze attention and/or dwell positions and times of the user. Accordingly, the VR application 110 can suppress the sparks or other controls to prevent such controls from catching the attention of the user more than the painting 304.

As shown in FIG. 3B, the user has begun to walk away from the painting and in doing so, the user may show the VR application 110 that she has an intention to interact with user interface elements (e.g., sparks, buttons, sliders, lists, interactive elements, etc.). This user intention is detected by the VR application 110 in connection with the gaze tracking module 112 or the movement tracking module 114 determining for example a motion or movement associated with a user or a different gaze attention and/or dwell positions and times of the user as detected when the point of looking was to visually enjoy the art. Upon passing of a predefined (i.e., system 100 defined) time period (i.e., milliseconds to seconds to provide such elements, the VR application 110 can display a spark 306 or spark 308, thus confirming to the user that what they are looking at is interactive. Display of such elements can function to provide the user with accurate targeting and selection of virtual objects that offers a positive VR experience. When the user looks outside of the boundaries of such interactive elements, the element may be made invisible (or transparent) again. For example, if the user gazes above a boundary 310, spark 306 and spark 308 may disappear from view since the user is determined to not be interested in content in the VR environment surrounding the locations of sparks 306 and 308. In some implementations, the cursor interfaces 302A-B may be enhanced by sounds, such as a soft bump sound when the user crosses a boundary of an interactive element, and/or upon triggering an eye gaze selection or acceleration, deceleration selection. In some implementations, the VR application 110 can modify the behavior of sparks 306, 308 displayed by the application 110 based on the eye gaze and/or movement associated with the user while the user is interacting with the VR environment.

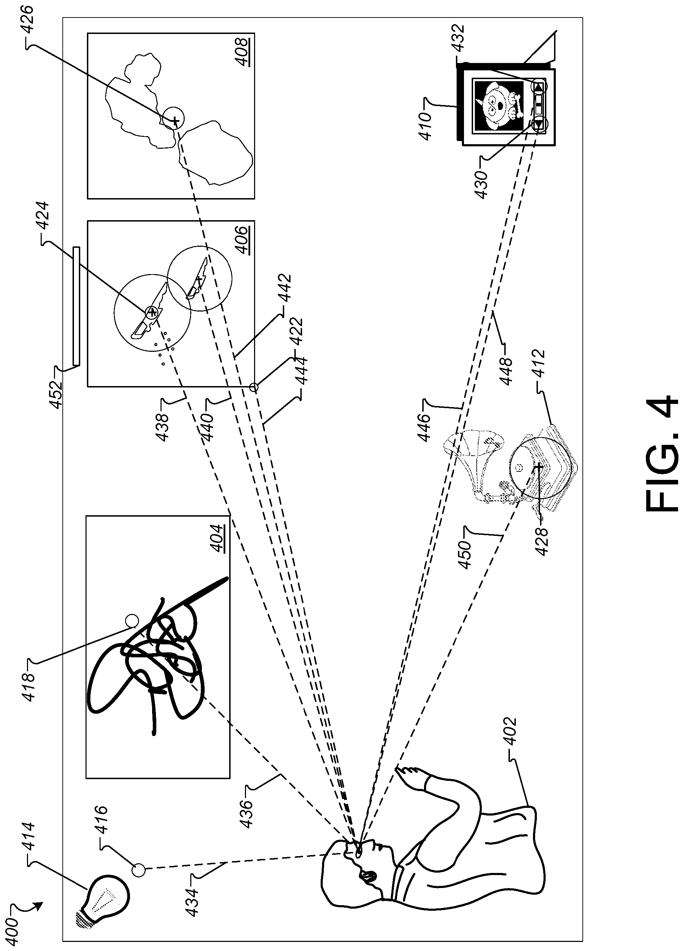

FIG. 4 is a diagram that illustrates an image 400 of a VR environment that a user can view on the screen of a VR HMD device. In this example, a user (e.g., user 202) may be viewing content through an HMD device 106, as shown in FIG. 2. The user 202 can be rendered in the VR environment as shown by virtually rendered user 402. For example, the image 400 projects/renders the user 202 into a VR environment and shows the user as user 402. Other renderings are possible. For example, a portion of the user 402 such as hands interacting in the VR environment, can be rendered rather than the entire user. The image 400 includes a rendering of the upper half of a body simulated from a corner viewing position. Here, the user 402 is shown pointing into the VR environment, which may indicate the arm position of the user as the user 402 is actually pointing in front of the HMD device 106.

In some implementations, the VR environment may not depict or display any portion of the user. Instead, the system 100 may show interactive elements to the user without depicting hands or other portions of the user nearing such interactive elements. This can indicate to the user that her actions trigger sparks and/or targets, but those actions may not be presently available to the user attempting access.

In some implementations, the HMD device 106 can include hardware and software that can recognize, monitor, and/or track 3D movement of a computing device (e.g., mobile device 102), a controller, or other device renderable in a VR environment. For example, if the mobile device 102 is placed in front of or held within a range of positions relative to the HMD device 106, the mobile device may be rendered in the environment and can function to provide real-time position and orientation data to the VR application 110 so that the VR application 110 can render device 102 in real-time in the VR environment in the detected position and orientation of the actual device 102.

In the example shown in FIG. 4, the user 402 may be walking into a simulated living room and may be interacting in a VR environment as a user walking through the living room. The VR environment shown here includes artwork 404, 406, and 408, picture frame 410, music player 412 (e.g., a gramophone), and a light 414. The VR environment also includes a number of targets (e.g., sparks) 416-432 that can be triggered as a user approaches the sparks 416-432. In some implementations, the VR application 110 (e.g., using spark detection module 120) can detect one of the corresponding eye gaze paths 434-450 invoked by the user 402.

In a non-limiting example, a user wearing the HMD device 106 can use eye gaze tracking and head position to select an object in the VR environment. As the user 402 (simulated by actions from actual user 202) looks at the collection of items 404-414, the user's gaze shifts from element to element along a path (e.g., 434-450). In the illustrated example, the gaze associated with user 402 can shift along the paths 434-450. The paths represent locations in the VR environment upon which the user 402 focuses his or her gaze for a detected amount of time. For example, the light 414 may be off when the user enters the example virtual living room. Upon gazing toward the light and more specifically at spark 416 (near or on the light 414) for a predetermined amount of time (e.g., 3 seconds), the gaze into spark 416 can trigger VR application 110 to turn the light 414 on. As such, a cursory glance at the light may not trigger an on or off state for the light 414. In some implementations, the spark can be configured with no countdown timer and can be triggered with a cursory glance rather than delayed by detected gaze at the three second time delay. Providing a hover-like trigger using eye gaze to invoke functionality of objects can provide an advantage of allowing the user to interact with virtual content and objects intentionally by hovering, rather than immediately triggering functionality based on proximity. The hover-like trigger can enable the user to learn to intently stare or move toward a virtual object for a specific amount of time to invoke functionality from the object.

Similarly, the user 402 can walk or wave toward the light 414 and the VR application 110 may be configured to determine a walking speed or a gesture speed at which to engage the spark 416 to trigger the light 414 to turn on or off (based on a current state of the light 414). For example, application 110 can engage an accelerometer and/or GPS devices on mobile device 102. If the VR application 110 detects such a speed, the light 414 can be switched on. In some implementations, the spark 416 may be shown to the user as a selectable control to engage the light 414. In some implementations, the spark 416 may shimmer or glow to indicate that selection of the spark 416 can control something near the spark 416. In some implementations, the spark 416 may not appear until the user 402 is within a particular (or threshold) range of the spark 416. In some implementations, the spark 416 may not appear until the user reaches within a specific range of light 414. In some implementations, the spark 416 can be triggered when a user walks through the spark 416.

In another non-limiting example, the user 402 may begin to walk toward abstract artwork 404. In this example, the spark 418 may not be shown to the user 402 upon approaching the artwork 404 because the point of viewing the artwork 404 is to enjoy the lines and content in the artwork 404, rather than interact with the artwork via controls. If the spark 418 were to be displayed to the user upon detecting the user's approach or eye gaze, it may detract from the user's enjoyment of the artwork 418. However, the eye gaze detection performed by system 100 can be set to a lengthy trigger time before displaying the spark control 418. For example, the VR application 110 can configure spark 418 to be provided as a control after a threshold amount of time is met, such as at 5 minutes of user being within a threshold proximity to the artwork 404 or at 3 minutes of gaze time within a defined zone of the artwork 404. At the threshold, the VR application 110 can provide the spark 418 and a short eye gaze by the user 402 at the spark (e.g., 50 milliseconds) can be detected and the controls associated with spark 418 can be displayed. For example, controls to be displayed may include a menu of selectable features, such as the artist of the artwork 404, the rareness of the artwork 404, or the price of purchasing a copy of the artwork 404.

In some implementations, the spark 418 may be triggered by a particular gesture. For example, the spark 418 may not be shown to the user 402 unless the user 402 moves to touch the artwork. Upon nearing the artwork 404, the spark 418 can be triggered to display before the user reaches the artwork 404. The spark 418 can be triggered by the swift movement of an arm or other body part as the user 402 reaches or moves toward the artwork 404.

In a similar fashion to spark 418, a spark 422 may not be shown to the user until a particular threshold is met. For example, if the user 402 quickly moves into the space of artwork 406 or the user's gaze moves near artwork 406, the spark 422 may trigger and the user can stare at the spark 422 or stare at a menu item provided by the triggering of spark 422. In this example, spark 422 may trigger a control to turn on light 452 to enhance viewing of artwork 406, for example. The user 402 can select (via eye gaze or dwell time) such a control to have the light 452 turned on. Similar triggers can occur with sparks 424 and 426 in which the sparks may not be provided until a user satisfies a condition predefined by the VR application 110. The conditions may be eye gaze elapsed time, dwell time of a gaze or movement, movement of the user, gestures performed by the user, external controls combined with gaze or dwell or user movement, etc.

In another non-limiting example, the user 402 may walk toward or gaze toward the electronic photo frame 410. The user can view the photo in the frame and in some implementations can be provided sparks 430 and/or 432 to engage a scrolling of the pictures on frame 410. For example, upon nearing frame 410, the sparks 430 and 432 may be provided to the user 402 upon the VR application 110 detecting that the user is gazing at the frame 410. In the event that the user nears the frame 410, but passes quickly by the frame into another area of the virtual living room, the VR application 110 can detect such a speed or movement (i.e., acceleration into the area of frame 410) and can determine not to trigger the sparks 430 and 432. This is because the VR software detected an acceleration passing by the frame 410 and deduced that the user was not interesting in viewing the frame 410 or controls associated with the frame 410. If the user moves into an area near the frame 410 (i.e., deceleration into the area of frame 410), the sparks 430 and 432 may be provided for selection via gaze time, gesture, or other interactive indication performed by the user 402.

In some implementations, the sparks 430 and 432 may be provided as scroll button controls. Similar to how a user would use a trackpad or mouse to select content in a list or move forward and backward through stored items, the sparks 430 and 432 can be selected using eye gaze to select a scroll button or to accelerate, or decelerate through items in a list or through stored items (e.g., files, photos, books, etc.). For example, the user 402 can walk up to frame 410 and gaze at control 432 to begin a scroll through photos on the frame 410. The scrolling can continue at a designated paced once begun or can be configured to scroll the photos each time the user looks at the spark 430 or 432. That is, the user may gaze (gaze 448) at spark 432 to advance the displayed photo in the frame 410. By looking away from the spark 432, the frame 410 can stop advancing photos based on the user's change in gaze, for example. In some implementations, the sparks 430 and 432 are shown at all times and advancing a photo involves a single millisecond of gaze time. That is, since scrolling forward or backward in such a situation would not cause the user 402 a concern, the VR application 110 can associate a near zero time threshold/dwell time requirement in order to advance a photo. The user's quickness or slowness when changing gaze can also be used by VR application 110 to choose a speed at which to scroll the photos. Namely, the VR application 110 can determine and/or detect the user's intended scroll speed by analyzing accelerated or decelerated gaze movement and/or head movement. Similar scroll controls and detection of acceleration or deceleration into the scroll control or displayed lists associated with the control can be used on other items in a VR environment. For example, similar sparks can be generated to be used as gaze-based scroll controls in documents, menus, playlists, etc.

In general, the movement, speed, and/or eye gaze can be used to trigger content to be displayed on the frame 410. Similarly, if the user looks to the right of the frame 410 to view additional content on the wall, for example, the frame 410 may stop scrolling. That is, the spark detection module 120 can use the user's 402 eye gaze as an input to determine that the user's intent is no longer to view the content in the frame 410 on the television, as the user's gaze has shifted to the right to view other content.

In another non-limiting example, the user 402 may wish to change music on the music player 412. Here, the music player 412 may be an old gramophone that is reconfigured to accept electronic input when connected to an electronic device that controls the playing of music. The user 402 can gaze (gaze 450) at spark 428 to trigger a menu that can be used to scroll songs, play songs, or otherwise configure music. The spark 428 may be provided to the user when the user decelerates into the area of the music player 412. In some implementations, the user's combination of a gaze and a deceleration into the area can trigger the spark 428 to appear or alternatively, to trigger a menu from the spark to appear.

In some implementations, the trigger to a particular spark may be based on words or phrases uttered by the user. For example, if the user utters, "put this on the shelf," the VR application 110 can infer based on gaze detection that the user intends to move a book (that the user is pointing at or holding) to a shelf in the VR environment. In response to detecting the voice command "put this on the shelf," the VR application 110 can detect an eye gaze associated with the utterance and can flash, outline, highlight, or otherwise indicate user selection (via eye-gaze) of the book. The indication can convey to the user that the application 110 determined that the user meant the pronoun "this" to indicate the book that the user is currently holding in the VR environment. The indication can provide visual feedback on the object that the VR application 110 will be performing the requested action on. As such, the user's eye gaze can be used to indicate specific context and have associated actions apply to the items in the context. Indications can include, but are not limited to glowing, flashing, outlining, highlighting, texturizing, raising, lowering, color changing, dimming portions while brightening other portions, and brightening portions, while dimming other portions, or any combination thereof.

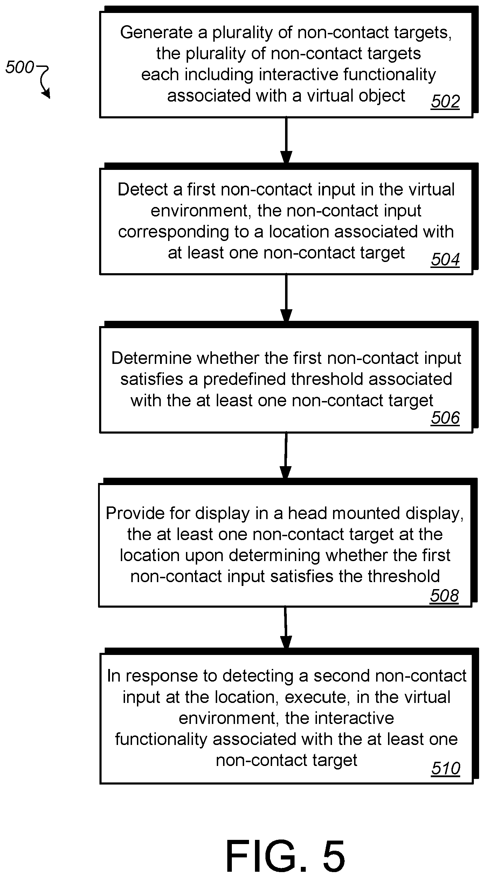

FIG. 5 is a flow chart diagramming one embodiment of a process 500 to interact with targets (e.g., sparks) in a virtual environment. In this example, at least one user may be accessing the virtual environment using a computing device and a head mounted display, such as HMD device 106 executing VR application 110, for example. The virtual environment may be displayed on HMD device 106 and controlled via VR application 110 or other application.

As shown in FIG. 5, at block 502, the method can include VR application 110 generating and displaying, for a virtual environment, a plurality of targets (e.g., sparks) that are non-contact targets. Each target can be placed in the virtual environment at a location with respect to the defined coordinate system of the virtual environment. The sparks may be considered non-contact targets because a user may be able to trigger functionality associated with the sparks by non-contact methods including, but not limited to eye gaze sensing, head gaze sensing, hand movement sensing, proximity sensing, gesture sensing, voice sensing, sensing user or object acceleration or deceleration into an area, virtual device interaction with an object in the VR environment to provide an environment-sensed movement, temperature sensing, etc.

The non-contact targets may each include interactive functionality associated with particular virtual objects and/or virtual scenes. In some implementations, the interactive functionality associated with the virtual object includes a non-contact selectable menu corresponding to one or more virtual objects in the VR environment. In some implementations, the non-contact targets may be represented by sparks, VR objects, or other VR elements, as described above.

At block 504, the method 500 may include detecting a first non-contact input in the virtual environment. The non-contact input may correspond to a location associated with at least one of the non-contact target within the VR environment with respect to the coordinate system of the virtual environment. In some implementations, the first non-contact input may include a deceleration speed associated with a user accessing the virtual environment. For example, if the user decelerates into an area near a spark, the VR application 110 may trigger the spark to be displayed based on determining that the user's slowing indicates interest in one or more virtual objects associated with the spark.

Similarly, the first non-contact input can include an acceleration speed associated with the user. The acceleration speed may indicate to the VR application 110 that the user wishes to view, trigger, or quickly trigger a spark. For example, if the user performs a quick gesture near a music player control knob, the VR application may trigger a spark to increase or decrease the volume of the music player based on the speed of the gesture. In some implementations, the acceleration toward a spark may indicate that the user does not wish to trigger any sparks and is instead moving through the room to another area.

At block 506, the method 500 may include determining whether the first non-contact input satisfies a predefined threshold associated with the at least one non-contact target. For example, the VR application 110 can determine whether the first non-contact input satisfies the predefined threshold by obtaining trigger information for the plurality of non-contact targets. The trigger information may correspond to indications for executing interactive functionality associated with a non-contact target (e.g., spark).

Trigger information may include predefined thresholds for time, eye gaze, and/or user movement. For example, a predefined threshold for triggering display of a non-contact target based on non-contact input may include length or angle of eye gaze. In particular, if the user gazes in the direction near or at a non-contact target for 200 milliseconds, for example, the VR application 110 can access a predefined threshold with respect to eye gaze of 50-400 milliseconds and can determine that the eye gaze of the user (200 milliseconds) falls within the range. Accordingly, the application 110 can trigger the non-contact target to be displayed. In some implementations, the eye gaze can also trigger the interactive functionality associated with the non-contact target. Additional trigger types are possible and can include, but are not limited to the non-contact input described above.

At block 508, the method 500 may include providing for display in a head mounted display, the at least one non-contact target at the location, upon determining that the first non-contact input satisfies the predefined threshold. Determining whether the first non-contact input satisfies the threshold can also include determining an intent associated with a user and determining an initial location in the virtual environment and a movement speed for the user. For example, the VR application can sense or infer user intent based on sensed movement and/or eye gaze of the user. Determining whether the first non-contact input satisfies the threshold can further include comparing the intent and the movement speed to the trigger information to obtain a confidence level for executing the interactive functionality. In some implementations, determining the intent includes analyzing an acceleration or deceleration of an eye gaze associated with the user.

At block 510, the process 500 may include in response to detecting a second non-contact input at the location, executing, in the virtual environment, the interactive functionality associated with the at least one non-contact target. In some implementations, the second non-contact input includes an eye gaze associated with a user accessing the head mounted display. In some implementations, the second non-contact input includes an eye gaze associated with a user, the eye gaze being fixated to trigger the interactive functionality. This eye gaze may be configured to trigger the interactive functionality after a fixation of about 50 milliseconds to about 100 milliseconds.

In some implementations, detecting the second non-contact input includes detecting eye gaze direction associated with a user by analyzing a plurality of images of an eye of the user. The analysis can be performed by one or more camera devices placed in the head mounted device. In some implementations, the VR application can, in response to detecting the second non-contact input, provide a plurality of non-contact controls at the location. The plurality of non-contact controls can be selected by the user with eye gaze, gestures, movements, sound, or other non-contact method described herein.

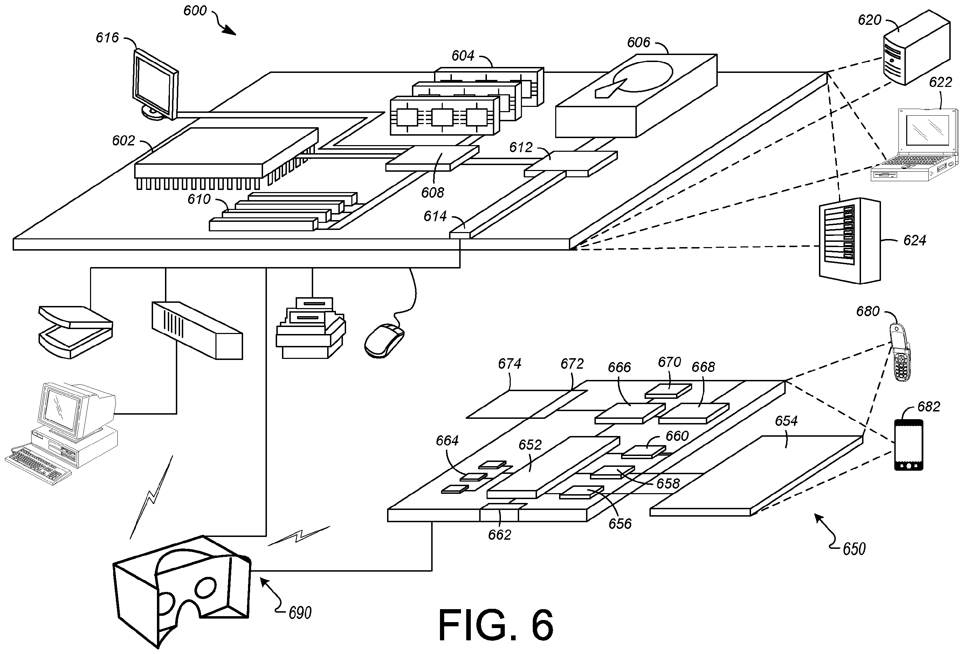

FIG. 6 shows an example of a generic computer device 600 and a generic mobile computer device 650, which may be used with the techniques described here. Computing device 600 includes a processor 602, memory 604, a storage device 606, a high-speed interface 608 connecting to memory 604 and high-speed expansion ports 610, and a low speed interface 612 connecting to low speed bus 614 and storage device 606. Each of the components 602, 604, 606, 608, 610, and 612, are interconnected using various busses, and may be mounted on a common motherboard or in other manners as appropriate. The processor 602 can process instructions for execution within the computing device 600, including instructions stored in the memory 604 or on the storage device 606 to display graphical information for a GUI on an external input/output device, such as display 616 coupled to high speed interface 608. In other implementations, multiple processors and/or multiple buses may be used, as appropriate, along with multiple memories and types of memory. In addition, multiple computing devices 600 may be connected, with each device providing portions of the necessary operations (e.g., as a server bank, a group of blade servers, or a multi-processor system).

The memory 604 stores information within the computing device 600. In one implementation, the memory 604 is a volatile memory unit or units. In another implementation, the memory 604 is a non-volatile memory unit or units. The memory 604 may also be another form of computer-readable medium, such as a magnetic or optical disk.

The storage device 606 is capable of providing mass storage for the computing device 600. In one implementation, the storage device 606 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 604, the storage device 606, or memory on processor 602.

The high speed controller 608 manages bandwidth-intensive operations for the computing device 600, while the low speed controller 612 manages lower bandwidth-intensive operations. Such allocation of functions is exemplary only. In one implementation, the high-speed controller 608 is coupled to memory 604, display 616 (e.g., through a graphics processor or accelerator), and to high-speed expansion ports 610, which may accept various expansion cards (not shown). In the implementation, low-speed controller 612 is coupled to storage device 606 and low-speed expansion port 614. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 600 may be implemented in a number of different forms, as shown in the figure. For example, it may be implemented as a standard server 620, or multiple times in a group of such servers. It may also be implemented as part of a rack server system 624. In addition, it may be implemented in a personal computer such as a laptop computer 622. Alternatively, components from computing device 600 may be combined with other components in a mobile device (not shown), such as device 650. Each of such devices may contain one or more of computing device 600, 650, and an entire system may be made up of multiple computing devices 600, 650 communicating with each other.

Computing device 650 includes a processor 652, memory 664, an input/output device such as a display 654, a communication interface 666, and a transceiver 668, among other components. The device 650 may also be provided with a storage device, such as a microdrive or other device, to provide additional storage. Each of the components 650, 652, 664, 654, 666, and 668, are interconnected using various buses, and several of the components may be mounted on a common motherboard or in other manners as appropriate.

The processor 652 can execute instructions within the computing device 650, including instructions stored in the memory 664. The processor may be implemented as a chipset of chips that include separate and multiple analog and digital processors. The processor may provide, for example, for coordination of the other components of the device 650, such as control of user interfaces, applications run by device 650, and wireless communication by device 650.

Processor 652 may communicate with a user through control interface 658 and display interface 656 coupled to a display 654. The display 654 may be, for example, a TFT LCD (Thin-Film-Transistor Liquid Crystal Display) or an OLED (Organic Light Emitting Diode) display, or other appropriate display technology. The display interface 656 may comprise appropriate circuitry for driving the display 654 to present graphical and other information to a user. The control interface 658 may receive commands from a user and convert them for submission to the processor 652. In addition, an external interface 662 may be provide in communication with processor 652, so as to enable near area communication of device 650 with other devices. External interface 662 may provide, for example, for wired communication in some implementations, or for wireless communication in other implementations, and multiple interfaces may be used.

The memory 664 stores information within the computing device 650. The memory 664 can be implemented as one or more of a computer-readable medium or media, a volatile memory unit or units, or a non-volatile memory unit or units. Expansion memory 674 may also be provided and connected to device 650 through expansion interface 672, which may include, for example, a SIMM (Single In Line Memory Module) card interface. Such expansion memory 674 may provide extra storage space for device 650, or may also store applications or other information for device 650. Specifically, expansion memory 674 may include instructions to carry out or supplement the processes described above, and may include secure information also. Thus, for example, expansion memory 674 may be provide as a security module for device 650, and may be programmed with instructions that permit secure use of device 650. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 664, expansion memory 674, or memory on processor 652, that may be received, for example, over transceiver 668 or external interface 662.

Device 650 may communicate wirelessly through communication interface 666, which may include digital signal processing circuitry where necessary. Communication interface 666 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 668. In addition, short-range communication may occur, such as using a Bluetooth, Wi-Fi, or other such transceiver (not shown). In addition, GPS (Global Positioning System) receiver module 670 may provide additional navigation- and location-related wireless data to device 650, which may be used as appropriate by applications running on device 650.

Device 650 may also communicate audibly using audio codec 660, which may receive spoken information from a user and convert it to usable digital information. Audio codec 660 may likewise generate audible sound for a user, such as through a speaker, e.g., in a handset of device 650. Such sound may include sound from voice telephone calls, may include recorded sound (e.g., voice messages, music files, etc.), and may also include sound generated by applications operating on device 650.

The computing device 650 may be implemented in a number of different forms, as shown in the figure. For example, it may be implemented as a cellular telephone 680. It may also be implemented as part of a smart phone 682, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

In some implementations, the computing devices depicted in FIG. 6 can include sensors that interface with a virtual reality (HMD device 690). For example, one or more sensors included on a computing device 650 or other computing device depicted in FIG. 6, can provide input to HMD device 690 or in general, provide input to a VR environment. The sensors can include, but are not limited to, a touchscreen, accelerometers, gyroscopes, pressure sensors, biometric sensors, temperature sensors, humidity sensors, and ambient light sensors. The computing device 650 can use the sensors to determine an absolute position and/or a detected rotation of the computing device in the VR environment that can then be used as input to the VR environment. For example, the computing device 650 may be incorporated into the VR environment as a virtual object, such as a controller, a laser pointer, a keyboard, a weapon, etc. Positioning of the computing device/virtual object by the user when incorporated into the VR environment can allow the user to position the computing device to view the virtual object in certain manners in the VR environment. For example, if the virtual object represents a laser pointer, the user can manipulate the computing device as if it were an actual laser pointer. The user can move the computing device left and right, up and down, in a circle, etc., and use the device in a similar fashion to using a laser pointer.

In some implementations, one or more input devices included on, or connect to, the computing device 650 can be used as input to the VR environment. The input devices can include, but are not limited to, a touchscreen, a keyboard, one or more buttons, a trackpad, a touchpad, a pointing device, a mouse, a trackball, a joystick, a camera, a microphone, earphones or buds with input functionality, a gaming controller, or other connectable input device. A user interacting with an input device included on the computing device 650 when the computing device is incorporated into the VR environment can cause a particular action to occur in the VR environment.

In some implementations, a touchscreen of the computing device 650 can be rendered as a touchpad in VR environment. A user can interact with the touchscreen of the computing device 650. The interactions are rendered, in HMD device 690 for example, as movements on the rendered touchpad in the VR environment. The rendered movements can control objects in the VR environment.

In some implementations, one or more output devices included on the computing device 650 can provide output and/or feedback to a user of the HMD device 690 in the VR environment. The output and feedback can be visual, tactical, or audio. The output and/or feedback can include, but is not limited to, vibrations, turning on and off or blinking and/or flashing of one or more lights or strobes, sounding an alarm, playing a chime, playing a song, and playing of an audio file. The output devices can include, but are not limited to, vibration motors, vibration coils, piezoelectric devices, electrostatic devices, light emitting diodes (LEDs), strobes, and speakers.

In some implementations, the computing device 650 may appear as another object in a computer-generated, 3D environment. Interactions by the user with the computing device 650 (e.g., rotating, shaking, touching a touchscreen, swiping a finger across a touch screen) can be interpreted as interactions with the object in the VR environment. In the example of the laser pointer in a VR environment, the computing device 650 appears as a virtual laser pointer in the computer-generated, 3D environment. As the user manipulates the computing device 650, the user in the VR environment sees movement of the laser pointer. The user receives feedback from interactions with the computing device 650 in the VR environment on the computing device 650 or on the HMD device 690.

In some implementations, a computing device 650 may include a touchscreen. For example, a user can interact with the touchscreen in a particular manner that can mimic what happens on the touchscreen with what happens in the VR environment. For example, a user may use a pinching-type motion to zoom content displayed on the touchscreen. This pinching-type motion on the touchscreen can cause information provided in the VR environment to be zoomed.

In some implementations, one or more input devices in addition to the computing device (e.g., a mouse, a keyboard) can be rendered in a computer-generated, 3D environment. The rendered input devices (e.g., the rendered mouse, the rendered keyboard) can be used as rendered in the VR environment to control objects in the VR environment.

Computing device 600 is intended to represent varying forms of digital computers, such as laptops, desktops, workstations, personal digital assistants, servers, blade servers, mainframes, and other appropriate computers. Computing device 650 is intended to represent various forms of mobile devices, such as personal digital assistants, cellular telephones, smart phones, and other similar computing devices. The components shown here, their connections and relationships, and their functions, are meant to be exemplary only, and are not meant to limit implementations of the inventions described and/or claimed in this document.

A number of embodiments have been described. Nevertheless, it will be understood that various modifications may be made without departing from the scope of the specification.

## Claims

1. A computer-implemented method, the method comprising:
generating (502), for a virtual environment, a plurality of non-contact targets, the plurality of non-contact targets each including interactive functionality associated with a virtual object;
detecting (504) a first non-contact input in the virtual environment, the first non-contact input corresponding to a location associated with at least one of the plurality of non-contact targets;
determining (506) whether the first non-contact input satisfies a predefined first threshold associated with the at least one non-contact target, and upon determining that the first non-contact input satisfies the predefined first threshold, providing (508) for display in a head mounted display (106) worn by a user, the at least one non-contact target at the location; and **characterized in that**
in response to detecting a second non-contact input at the location and upon the second non-contact input satisfying a second threshold, executing (510), in the virtual environment, the interactive functionality associated with the at least one non-contact target, wherein the second threshold is based on a size of the at least one non-contact target.

2. The method of claim 1, wherein the first non-contact input comprises a deceleration associated with the user (202) and the second non-contact input comprises an eye gaze associated with the user.

3. The method of claim 1, wherein the first non-contact input comprises an acceleration associated with the user (202) and the second non-contact input comprises an eye gaze associated with the user.

4. The method of claim 1, wherein detecting the second non-contact input comprises detecting an eye gaze direction associated with the user (202) by analyzing a plurality of images of an eye of the user, wherein the eye gaze is detected with the head mounted device.

5. The method of claim 1, wherein determining whether the first non-contact input satisfies the predefined first threshold comprises:
obtaining trigger information for the plurality of non-contact targets, the trigger information corresponding to indications for executing interactive functionality;
determining an intent associated with the user (202), wherein the intent associated with the user is inferred based on sensed movement and/or eye gaze of the user;
determining an initial location in the virtual environment and a movement speed for the user; and
comparing the intent and the movement speed to the trigger information to obtain a confidence level for executing the interactive functionality.

6. The method of claim 5, wherein determining the intent includes analyzing an acceleration or deceleration of a movement associated with the user (202).

7. The method of claim 1, wherein the second non-contact input comprises an eye gaze associated with the user (202), the eye gaze being fixated to trigger the interactive functionality.

8. The method of claim 7, wherein the eye gaze triggers the interactive functionality after a fixation of 50 milliseconds to 100 milliseconds.

9. The method of claim 1, wherein the interactive functionality associated with the virtual object comprises a non-contact selectable menu corresponding to the virtual object.

10. The method of claim 1, further comprising, in response to detecting the second non-contact input, providing a plurality of non-contact controls at the location.

11. A computer system (600) configured to perform the method of any of claims 1-10.

12. A non-transitory computer readable medium containing instructions that, when executed by a processor of a computer system (600), cause the computer system to perform the method of any of claims 1-10.

## Patentansprüche

1. Computerimplementiertes Verfahren, das Verfahren umfassend:
Erzeugen (502) einer Vielzahl von berührungsfreien Zielen für eine virtuelle Umgebung, wobei die Vielzahl von berührungsfreien Zielen jeweils interaktive Funktionen in Verbindung mit einem virtuellen Objekt beinhalten;
Erkennen (504) einer ersten berührungslosen Eingabe in der virtuellen Umgebung, wobei die erste berührungslose Eingabe einem Standort in Verbindung mit zumindest einem aus der Vielzahl von berührungsfreien Zielen entspricht;
Ermitteln (506), ob die erste berührungslose Eingabe einen vordefinierten ersten Schwellenwert in Verbindung mit dem zumindest einen berührungsfreien Ziel erfüllt, und, wenn ermittelt wird, dass die erste berührungslose Eingabe den vordefinierten ersten Schwellenwert erfüllt, Bereitstellen (508) des zumindest einen berührungsfreien Ziels an dem Standort zur Anzeige auf einer am Kopf befestigten Anzeige (106), die von einem Benutzer getragen wird; und **gekennzeichnet durch**
in Reaktion auf das Erkennen einer zweiten berührungslosen Eingabe an dem Standort, und sofern die zweite berührungslose Eingabe einen zweiten Schwellenwert erfüllt, Ausführen (510) der interaktiven Funktionen in Verbindung mit dem zumindest einen berührungsfreien Ziel in der virtuellen Umgebung, wobei der zweite Schwellenwert auf einer Größe des zumindest einen berührungsfreien Ziels basiert.

2. Verfahren nach Anspruch 1, wobei die erste berührungslose Eingabe eine Verlangsamung in Verbindung mit dem Benutzer (202) umfasst und die zweite berührungslose Eingabe einen gerichteten Blick in Verbindung mit dem Benutzer umfasst.

3. Verfahren nach Anspruch 1, wobei die erste berührungslose Eingabe eine Beschleunigung in Verbindung mit dem Benutzer (202) umfasst und die zweite berührungslose Eingabe einen gerichteten Blick in Verbindung mit dem Benutzer umfasst.

4. Verfahren nach Anspruch 1, wobei das Erkennen der zweiten berührungslosen Eingabe ein Erkennen einer Blickrichtung in Verbindung mit dem Benutzer (202) durch Analysieren einer Vielzahl von Bildern eines Auges des Benutzers umfasst, wobei der gerichtete Blick mithilfe des am Kopf befestigten Geräts erkannt wird.

5. Verfahren nach Anspruch 1, wobei das ermitteln, ob die erste berührungslose Eingabe den vordefinierten ersten Schwellenwert erfüllt, Folgendes umfasst:
Erhalten von Auslöserinformationen für die Vielzahl von berührungsfreien Zielen, wobei die Auslöserinformationen Anhaltspunkten für eine Ausführung der interaktiven Funktionen entsprechen;
Ermitteln einer Absicht in Verbindung mit dem Benutzer (202), wobei die Absicht in Verbindung mit dem Benutzer basierend auf einer erfassten Bewegung und/oder eines gerichteten Blickes des Benutzers abgeleitet wird;
Ermitteln eines anfänglichen Standorts in der virtuellen Umgebung und einer Bewegungsgeschwindigkeit für den Benutzer; und
Vergleichen der Absicht und der Bewegungsgeschwindigkeit mit den Auslöserinformationen, um ein Konfidenzniveau für das Ausführen der interaktiven Funktionen zu erhalten.

6. Verfahren nach Anspruch 5, wobei das Ermitteln der Absicht ein Analysieren einer Beschleunigung oder Verlangsamung einer Bewegung in Verbindung mit dem Benutzer (202) beinhaltet.

7. Verfahren nach Anspruch 1, wobei die zweite berührungslose Eingabe einen gerichteten Blick in Verbindung mit dem Benutzer (202) umfasst, wobei der gerichtete Blick fixiert ist, um die interaktiven Funktionen auszulösen.

8. Verfahren nach Anspruch 7, wobei der gerichtete Blick die interaktiven Funktionen nach einer Fixierung von 50 Millisekunden bis 100 Millisekunden auslöst.

9. Verfahren nach Anspruch 1, wobei die interaktiven Funktionen in Verbindung mit dem virtuellen Objekt ein berührungslos auswählbares Menü, das dem virtuellen Objekt entspricht, umfasst.

10. Verfahren nach Anspruch 1, ferner umfassend, in Reaktion auf das Erkennen der zweiten berührungslosen Eingabe, Bereitstellen einer Vielzahl von berührungsfreien Bedienelementen an dem Standort.

11. Computersystem (600), das konfiguriert ist, das Verfahren nach einem der Ansprüche 1 bis 10 durchzuführen.

12. Nichtflüchtiges computerlesbares Medium, das Anweisungen enthält, die, bei Ausführung durch einen Prozessor eines Computersystems (600), das Computersystem veranlassen, das Verfahren nach einem der Ansprüche 1 bis 10 durchzuführen.

## Revendications

1. Procédé mis en œuvre par ordinateur, le procédé comprenant :
la génération (502), pour un environnement virtuel, d'une pluralité de cibles sans contact, la pluralité de cibles sans contact comprenant chacune une fonctionnalité interactive associée à un objet virtuel ;
la détection (504) d'une première entrée sans contact dans l'environnement virtuel, la première entrée sans contact correspondant à un emplacement associé à au moins une de la pluralité de cibles sans contact ;
la détermination (506) de si la première entrée sans contact satisfait à un premier seuil prédéfini associé à l'au moins une cible sans contact, et en ayant déterminé que la première entrée sans contact satisfait au premier seuil prédéfini, la fourniture (508) pour affichage dans un affichage monté sur la tête (106) porté par un utilisateur, de l'au moins une cible sans contact à l'emplacement ; et **caractérisé en ce que**
en réponse à la détection d'une deuxième entrée sans contact à l'emplacement et la deuxième entrée sans contact ayant satisfait à un deuxième seuil, l'exécution (510), dans l'environnement virtuel, de la fonctionnalité interactive associée à l'au moins une cible sans contact, dans laquelle le deuxième seuil est sur base d'une taille de l'au moins une cible sans contact.

2. Procédé selon la revendication 1, dans lequel la première entrée sans contact comprend une décélération associée à l'utilisateur (202) et la deuxième entrée sans contact comprend une commande oculaire associée à l'utilisateur.

3. Procédé selon la revendication 1, dans lequel la première entrée sans contact comprend une accélération associée à l'utilisateur (202) et la deuxième entrée sans contact comprend une commande oculaire associée à l'utilisateur.

4. Procédé selon la revendication 1, dans lequel la détection de la deuxième entrée sans contact comprend la détection d'une direction de commande oculaire associée à l'utilisateur (202) par l'analyse d'une pluralité d'images d'un œil de l'utilisateur, dans lequel la commande oculaire est détectée avec le dispositif monté sur la tête.

5. Procédé selon la revendication 1, dans lequel la détermination de si la première entrée sans contact satisfait au premier seuil prédéfini comprend :
l'obtention des informations de déclenchement pour la pluralité de cibles sans contact, les informations de déclenchement correspondant aux indications pour l'exécution de fonctionnalités interactives ;
la détermination d'une intention associée à l'utilisateur (202), dans laquelle l'intention associée à l'utilisateur est déduite sur base du mouvement détecté et/ ou de la commande oculaire de l'utilisateur ;
la détermination d'un emplacement initial dans l'environnement virtuel et d'une vitesse de mouvement pour l'utilisateur ; et
la comparaison de l'intention et de la vitesse de mouvement avec les informations de déclenchement afin d'obtenir un niveau de confiance pour l'exécution de la fonctionnalité interactive.

6. Procédé selon la revendication 5, dans lequel la détermination de l'intention comprend l'analyse d'une accélération ou d'une décélération d'un mouvement associé à l'utilisateur (202).

7. Procédé selon la revendication 1, dans lequel la deuxième entrée sans contact comprend une commande oculaire associée à l'utilisateur (202), la commande oculaire étant fixée pour déclencher la fonctionnalité interactive.

8. Procédé selon la revendication 7, dans lequel la commande oculaire déclenche la fonctionnalité interactive après une fixation de 50 millisecondes à 100 millisecondes.

9. Procédé selon la revendication 1, dans lequel la fonctionnalité interactive associée à l'objet virtuel comprend un menu sélectionnable sans contact correspondant à l'objet virtuel.

10. Procédé selon la revendication 1, comprenant en outre, en réponse à la détection de la deuxième entrée sans contact, la fourniture d'une pluralité de commandes sans contact à l'emplacement.

11. Système informatique (600) configuré pour réaliser le procédé selon l'une quelconque des revendications 1-10.

12. Support lisible par ordinateur non transitoire contenant des instructions qui lorsqu'elles sont exécutées par un processeur d'un système informatique (600), amènent le système informatique à exécuter le procédé selon l'une quelconque des revendications 1-10.
